# EUROPÄISCHE PATENTSCHRIFT

(11) **EP 2 684 241 B1**
(45) Veröffentlichungstag und Bekanntmachung des Hinweises auf die Patenterteilung: **24.02.2016**
(21) Anmeldenummer: 12708309.5
(22) Anmeldetag: 08.03.2012
(51) Int. Cl.: B60L 1/08, B60L 11/18, H01M 10/655, H01M 8/04, H05B 3/34

(54) **ELEKTRISCHER ENERGIESPEICHER MIT INTEGRIERTER FLEXIBLER KÜHL-HEIZKOMBINATION**
ELECTRICAL ENERGY STORE
ACCUMULATEUR D'ÉNERGIE ÉLECTRIQUE

(30) Priorität: 09.03.2011 AT 3202011
(43) Veröffentlichungstag der Anmeldung: 15.01.2014
(73) Patentinhaber: AVL List GmbH, 8020 Graz (AT)
(72) Erfinder: KÖRÖSI, Michael, A-8181 St. Ruprecht (AT); STUETZ, Harald, A-8102 Semriach (AT); YANKOSKI, Edward, A-8010 Graz (AT); MICHELITSCH, Martin, A-8062 Kumberg (AT); AIOLFI, Mauro, A-8020 Graz (AT)
(74) Vertreter: Babeluk, Michael
(86) Internationale Anmeldenummer: PCT/EP2012/054030
(87) Internationale Veröffentlichungsnummer: WO 2012/120090

(56) Entgegenhaltungen:
- WO-A1-2008/082399
- DE-A1-102007 055 232
- US-A1- 2003 003 330
- US-A1- 2004 137 295
- US-B1- 6 653 002

## Beschreibung

Die Erfindung betrifft einen elektrischen Energiespeicher, insbesondere für Kraftfahrzeuge, mit zumindest einem Batteriemodul mit einer Mehrzahl an zwischen zwei äußeren Endplatten in einem Stapel angeordneten Einzelzellen.

Es ist bekannt, die Kühlung und/oder Heizung eines Batteriemoduls mit einem Kühlmedium durchzuführen. Nachteilig ist, dass dafür Kühlmittelanschlüsse erforderlich sind du dass die Kühlkanäle im Batteriemodul relativ viel Bauraum in Anspruch nehmen. Die relativ große Anzahl an Bauteilen wirkt sich außerdem nachteilig auf die Herstellungskosten aus.

Die WO 2008/082399 A1 offenbart eine Brennstoffzelle, welche eine Mehrzahl an Einzelzellen aufweist, die einen Stapel bilden. Um die Einzelzellen aus dem kalten Zustand auf die gewünschte Betriebstemperatur zu bringen, ist im Bereich der äußeren Einzelzellen - nicht aber zwischen zwei Einzelzellen - jeweils ein Heizelement angeordnet. Auch aus der US 2004/0137295 A1 ist ein Brennstoffzellenstapel mit einer Widerstandsheizeinrichtung zum Erwärmen der äußeren Endzellen bekannt.

Die DE 10 2007 055 252 A1 beschreibt eine intelligente Membran-Elektrodenanordnung für eine Brennstoffzelle, wobei eine flexible gedruckte Schaltung auf einer Oberfläche eines Ionenaustauschmembran-Trägerfilms angebracht ist. Die flexible gedruckte Schaltung weist ein elektrisches Heizelement auf.

Bei Brennstoffzellen handelt es sich allerdings nicht um elektrische Energiespeicher, sondern um Wandler. Brennstoffzellen unterscheiden sich konzeptionell wesentlich von elektrischen Energiespeichern und sind nur in der Lage elektrische Energie aus chemischen Reaktionen zu gewinnen, aber nicht zu speichern.

Aufgabe der Erfindung ist es, die genannten Nachteile zu vermeiden und mit geringem Aufwand eine optimale Konditionierung des Batteriemoduls zu ermöglichen.

Erfindungsgemäß wird dies dadurch erreicht, dass zwischen zumindest zwei Einzelzellen ein vorzugsweise flexibles elektrisches Heizelement angeordnet ist, wobei vorzugsweise das Heizelement durch eine vorzugsweise flexible Heizfolie gebildet ist. Durch die flexible Gestaltung wird eine Konturanpassung möglich.

Bei einer Ausführungsvariante, bei der mindestens eine Einzelle in einem Einzelmodul angeordnet ist, kann vorgesehen sein, dass das elektrische Heizelement zwischen zwei Einzelmodulen angeordnet ist.

Das Heizelement kann ein Widerstandheizelement mit Heizdrähten sein.

Besonders vorteilhaft ist es, dass das Heizelement zumindest teilweise von einem Kühlelement umgeben und laserverschweißt ist. Das Kühlelement kann dabei durch eine vorzugsweise aus Blech gefertigte Kühlplatte gebildet sein. Es ist aber auch möglich, dass die Kühlplatte aus Kunststoff besteht.

Eine besonders gute Kühlwirkung lässt sich erzielen, wenn das Kühlelement großflächig um das Heizelement gefaltet ist und somit beide Seiten des Heizelementes umschließt. Genauso ist aber auch eine einseitige Kontaktierung des Kühlelementes mit dem Heizelement möglich.

Das Kühlelement kann mit dem Heizelement verklebt sein. Alternativ oder zusätzlich kann die Verbindung zwischen Heizelement und Kühlelement auch durch Formschluss erfolgen.

Die Erfindung wird im Folgenden anhand der Figuren näher erläutert. Es zeigen:

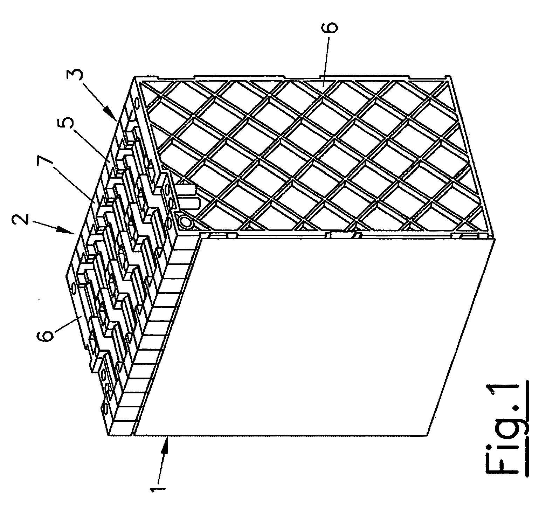

- Fig. 1: einen erfindungsgemäßen Energiespeicher in einer Schrägansicht;

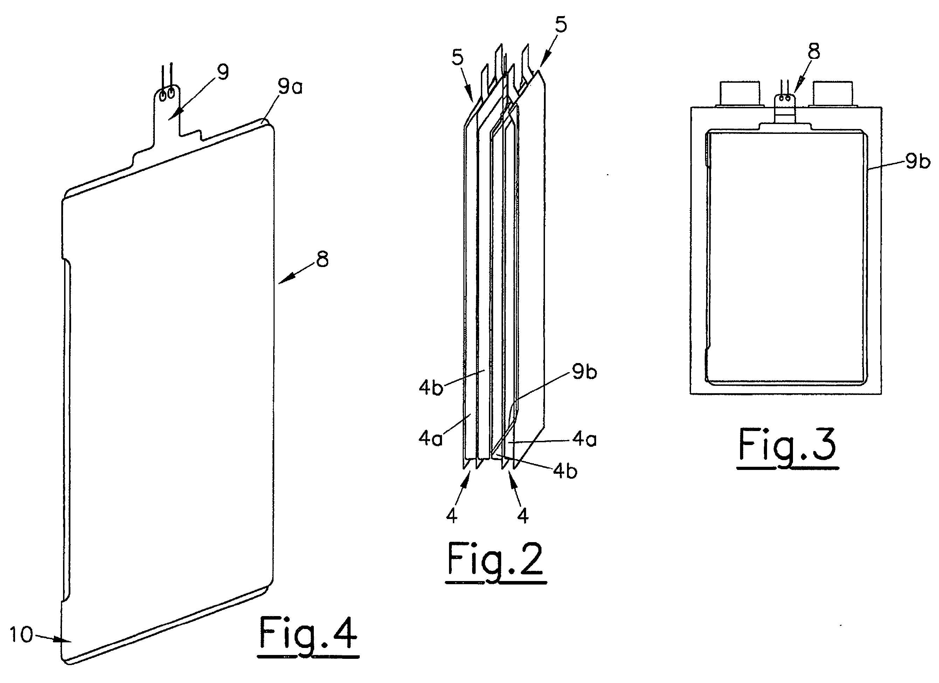

- Fig. 2: einen Stapel von Einzelzellen dieses Energiespeichers in einer Schrägansicht;
- Fig. 3: den Stapel in einer Seitenansicht;
- Fig. 4: ein Heiz- und Kühlelement in einer Schrägansicht;

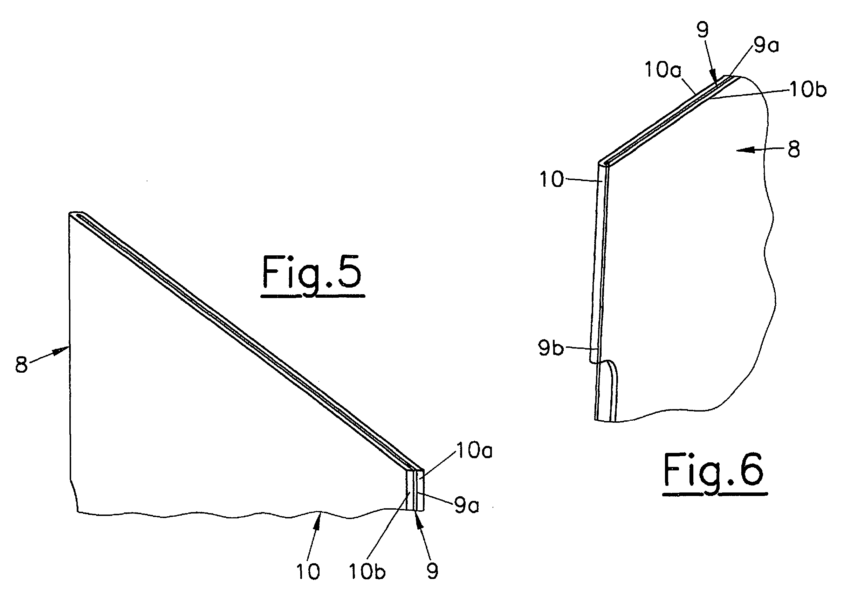

- Fig. 5: das Heiz- und Kühlelement in einer teilweise geschnittenen Schrägansicht; und
- Fig. 6: das Heiz- und Kühlelement in einer weiteren Schrägansicht.

Der elektrische Energiespeicher 1 beinhaltet zumindest einen Batteriemodul 2 mit einem Stapel 3 an Einzelzellen 4a, 4b aufweisenden Einzelmodulen 5, wobei an jedem Ende des Stapels jeweils eine Endplatte 6 angeordnet ist. Jeder Einzelmodul 5 weist einen Einzelzellrahmen 7 auf, wobei im Ausführungsbeispiel jeder Einzelzellenrahmen ein Zellenpaar 4 mit einer ersten und einer zweiten Einzelzelle 4a, 4b aufnimmt.

Zwischen zwei benachbarten Zellen 4b und/oder zwischen zwei benachbarten Einzelmodulen 5 ist eine kombiniertes Heiz- und Kühleinheit 8 mit einem Heizelement 9 und einem Kühlelement 10 angeordnet.

Das Heizelement wird durch eine dünne flexible Heizfolie 9a gebildet, welche Widerstandsdrähte 9b aufweisen kann. Durch die flexible Form ist eine Anpassung an verschiedene Oberflächen möglich. Das Heizelement 9a ist durch ein Kühlelement 10 aus beispielsweise gefaltetem Blech umschlossen und ist laserverschweißt. Somit bildet das Kühlelement an beiden Seiten des Heizelementes eine Kühlplatte 10a, 10b aus, welche an den Einzellzellen des Batteriemoduls 2 flächig anliegt. Die Heiz- und Kühleinheit 8 kann zwischen zwei Einzelzellenrahmen 7 eingeklemmt sein und somit maximal möglichen Oberflächenkontakt zu den anliegenden Einzelzellen 4b aufweisen. Die Wärmeabfuhr von den Kühlplatten 10a, 10b kann durch Luft- oder Flüssigkeitskühlung erfolgen. Gegebenenfalls können auch Peltierelemente zur Kühlung eingesetzt werden.

Die Verbindung zwischen Kühlelement 10 und Heizelement 9 kann durch Kleben oder durch Formschluss erfolgen.

Durch die extrem dünne und flache Ausführung benötigt die Heiz- und Kühleinheit 8 nur geringen Bauraum. Die vollflächige Auflage gewährleistet einen besonders guten Wärmeübergang.

## Patentansprüche

1. Elektrischer Energiespeicher (1), insbesondere für Kraftfahrzeuge, mit zumindest einem Batteriemodul (2) mit einer Mehrzahl an zwischen zwei äuβeren Endplatten (6) in einem Stapel (3) angeordneten Einzelzellen (4a, 4b), **dadurch gekennzeichnet, dass** zwischen zumindest zwei Einzelzellen (4a, 4b) ein elektrisches Heizelement (9) angeordnet ist.

2. Energiespeicher (1) nach Anspruch 1, wobei mindestens eine Einzelzelle (4a, 4b) in einem Einzelmodul (5) angeordnet ist, **dadurch gekennzeichnet, dass** das elektrische Heizelement (9) zwischen zwei Einzelmodulen (5) angeordnet ist.

3. Energiespeicher (1) nach Anspruch 1 oder 2, **dadurch gekennzeichnet, dass** das Heizelement (9) durch eine Heizfolie (9a) gebildet ist.

4. Energiespeicher (1) nach einem der Ansprüche 1 bis 3, **dadurch gekennzeichnet, dass** das Heizelement (9) zumindest teilweise von einem Kühlelement (10) umgeben ist.

5. Energiespeicher (1) nach Anspruch 4, **dadurch gekennzeichnet, dass** das Kühlelement (10) durch zumindest eine Kühlplatte (10a, 10b) gebildet ist.

6. Energiespeicher (1) nach Anspruch 5, **dadurch gekennzeichnet, dass** die Kühlplatte (10a, 10b) aus Blech gefertigt ist.

7. Energiespeicher (1) nach einem der Ansprüche 4 bis 6, **dadurch gekennzeichnet, dass** das Kühlelement (10) um das Heizelement (9) gefaltet ist.

8. Energiespeicher (1) nach einem der Ansprüche 4 bis 7, wobei jeder Einzelmodul (5) einen Einzelzellenrahmen (7) aufweist, **dadurch gekennzeichnet, dass** das Heiz- und Kühlelement (9, 10) zwischen den Einzelzellenrahmen (7) zweier benachbarter Einzelmodule (5) eingeklemmt ist und an den Einzelzellen (4a, 4b) anliegt.

9. Energiespeicher (1) nach einem der Ansprüche 1 bis 8, **dadurch gekennzeichnet, dass** Kühl- und Heizelement (9, 10) miteinander verklebt sind.

10. Energiespeicher (1) nach einem der Ansprüche 1 bis 9, **dadurch gekennzeichnet, dass** Kühl- und Heizelement (9, 10) miteinander formschlüssig verbunden sind.

11. Energiespeicher (1) nach einem der Ansprüche 1 bis 10, **dadurch gekennzeichnet**, Heizelement (9) und Kühlelement (10) eine kombinierte Heiz- und Kühleinheit (8) ausbilden.

12. Energiespeicher (1) nach einem der Ansprüche 1 bis 11, **dadurch gekennzeichnet, dass** das elektrische Heizelement (9) flexibel ausgebildet ist.

## Claims

1. An electrical energy storage device (1), especially for motor vehicles, comprising at least one battery module (2) with a plurality of individual cells (4a, 4b) which are arranged in a stack (3) between two outer end plates (6), **characterized in that** an electrical heating element (9) is arranged between at least two individual cells (4a, 4b).

2. An electrical energy storage device (1) according to claim 1, wherein at least one individual cell (4a, 4b) is arranged in an individual module (5), **characterized in that** the electrical heating element (9) is arranged between two individual modules (5).

3. An energy storage device (1) according to claim 1 or 2, **characterized in that** the heating element (9) is formed by a heating foil (9a).

4. An energy storage device (1) according to one of the claims 1 to 3, **characterized in that** the heating element (9) is surrounded at least partly by a cooling element (10).

5. An energy storage device (1) according to claim 4, **characterized in that** the cooling element (10) is formed by at least one cooling plate (10a, 10b).

6. An energy storage device (1) according to claim 5, **characterized in that** the cooling plate (10a, 10b) is made of sheet metal.

7. An energy storage device (1) according to one of the claims 4 to 6, **characterized in that** the cooling element (10) is folded around the heating element (9).

8. An energy storage device (1) according to one of the claims 4 to 7, wherein each individual module (5) comprises an individual cell frame (7), **characterized in that** the heating and cooling element (9, 10) is clamped between the individual cell frames (7) of two adjacent individual modules (5) and rests on the individual cells (4a, 4b).

9. An energy storage device (1) according to one of the claims 1 to 8, **characterized in that** the cooling and heating element (9, 10) are glued together.

10. An energy storage device (1) according to one of the claims 1 to 9, **characterized in that** the cooling and heating element (9, 10) are connected to each other by interlocking connection.

11. An energy storage device (1) according to one of the claims 1 to 10, **characterized in that** the heating element (9) and the cooling element (10) form a combined heating and cooling unit (8).

12. An energy storage device (1) according to one of the claims 1 to 11, **characterized in that** the electric heating element (9) is formed in a flexible way.

## Revendications

1. Accumulateur d'énergie électrique (1) en particulier pour des véhicules automobiles comprenant au moins un module de batterie (2) comprenant un ensemble de cellules individuelles (4a, 4b) montées entre deux plaques d'extrémité externe (6) selon une pile (3),
**caractérisé en ce qu'**
entre au moins deux cellules individuelles (4a, 4b) est monté un élément chauffant électrique (9).

2. Accumulateur d'énergie (1) conforme à la revendication 1, dans lequel au moins une cellule individuelle (4a, 4b) est montée dans un module individuel (5),
**caractérisé en ce que**
l'élément chauffant électrique (9) est monté entre deux modules individuels (5).

3. Accumulateur d'énergie (1) conforme à la revendication 1 ou 2,
**caractérisé en ce que**
l'élément chauffant (9) est formé par un film chauffant (9a).

4. Accumulateur d'énergie (1) conforme à l'une des revendications 1 à 3,
**caractérisé en ce que**
l'élément chauffant (9) est entouré au moins partiellement par un élément de refroidissement (10).

5. Accumulateur d'énergie (1) conforme à la revendication 4,
**caractérisé en ce que**
l'élément de refroidissement (10) est formé par au moins une plaque de refroidissement (10a, 10b).

6. Accumulateur d'énergie (1) conforme à la revendication 5,
**caractérisé en ce que**
la plaque de refroidissement (10a, 10b) est réalisée en tôle.

7. Accumulateur d'énergie (1) conforme à l'une des revendications 4 à 6,
**caractérisé en ce que**
l'élément de refroidissement (10) est replié autour de l'élément chauffant (9).

8. Accumulateur d'énergie (1) conforme à l'une des revendications 4 à 7, dans lequel chaque module individuel (5) comprend un cadre de cellules individuelles (7),
**caractérisé en ce que**
l'élément de chauffage et de refroidissement (9, 10) est serré entre les cadres de cellules individuelles (7) de deux modules indépendant (5) voisins et s'applique sur les cellules individuelles (4a, 4b).

9. Accumulateur d'énergie (1) conforme à l'une des revendications 1 à 8,
**caractérisé en ce que**
l'élément de refroidissement et l'élément de chauffage (9, 10) sont collés l'un sur l'autre.

10. Accumulateur d'énergie (1) conforme à l'une des revendications 1 à 9,
**caractérisé en ce que**
l'élément de refroidissement (9) et l'élément de chauffage (10) sont reliés par une liaison par la forme.

11. Accumulateur d'énergie (1) conforme à l'une des revendications 1 à 10,
**caractérisé en ce que**
l'élément de chauffage (9) et l'élément de refroidissement (10) forment une unité de chauffage et de refroidissement (8) combinée.

12. Accumulateur d'énergie (1) conforme à l'une des revendications 1 à 11,
**caractérisé en ce que**
l'élément de chauffage électrique (9) est flexible.
